# EUROPEAN PATENT SPECIFICATION

(11) **EP 4 091 897 B1**
(45) Date of publication and mention of the grant of the patent: **28.01.2026**
(21) Application number: 22168705.6
(22) Date of filing: 19.04.2022
(51) Int. Cl.: B60W 50/08, B60W 50/14, B60W 60/00, B60K 28/06, B60W 50/00, B60W 40/08

(54) **VEHICLE CONTROL APPARATUS, VEHICLE AND DRIVING ASSISTANCE METHOD**
FAHRZEUGSTEUERUNGSVORRICHTUNG, FAHRZEUG UND FAHRERASSISTENZVERFAHREN
APPAREIL DE COMMANDE DE VÉHICULE, VÉHICULE ET PROCÉDÉ D'ASSISTANCE À LA CONDUITE

(30) Priority: 21.05.2021 JP 2021085876
(43) Date of publication of application: 23.11.2022
(73) Proprietor: MAZDA MOTOR CORPORATION, Hiroshima 730-8670 (JP)
(72) Inventor: HOSHINO, Yoko, Aki-gun (JP); NAKANO, Megumi, Aki-gun (JP); KUWAHARA, Junichiro, Aki-gun (JP); KUSUMOTO, Shimpei, Aki-gun (JP)
(74) Representative: Müller-Boré & Partner Patentanwälte PartG mbB

(56) References cited:
- US-A1- 2020 207 341
- US-A1- 2020 387 156
- CHEN KEJI ET AL: "Realization and Evaluation of an Instructor-Like Assistance System for Collision Avoidance", IEEE TRANSACTIONS ON INTELLIGENT TRANSPORTATION SYSTEMS, IEEE, PISCATAWAY, NJ, USA, vol. 22, no. 5, 4 March 2020 (2020-03-04), pages 2751 - 2760, XP011851661, ISSN: 1524-9050, [retrieved on 20210430], DOI: 10.1109/TITS.2020.2974495

## Description

### [Technical Field]

The present invention relates to a vehicle control apparatus and, in particular, to a vehicle control apparatus for driving assistance. The present invention also relates to a vehicle and a driving assistance method.

### [Background Art]

A vehicle that can travel by automated driving technology (or autonomous driving technology) has been developed. Under automated driving control, the vehicle travels by proactively performing a vehicle operation (SAE Level of Driving Automation 3 or higher). In other words, a driver does not have to perform the vehicle operations such as of an accelerator, a brake, and a steering wheel. The automated driving technology is useful for the driver with normal driving ability, and is particularly useful for an elderly person with reduced driving ability and a person with mild cognitive impairment (MCI) in terms of travel safety.

Meanwhile, some of the drivers have a desire to drive the vehicle by himself/herself. However, in the case where required driving ability, which is required for the driver according to traffic environment or the like, is not balanced with the driver's current driving ability, the driver may feel bored of or, conversely, be psychologically stressed by driving. In view of the above, the present applicant has proposed a vehicle control apparatus that provides driving assistance or a driving load so as to balance the required driving ability with the current driving ability (see JP 6555649 B2, for example). With this vehicle control apparatus, the driver can drive the vehicle in a balancing state between the required driving ability and the current driving ability. As a result, the driver can enjoy and concentrate on safe driving regardless of difficulty of the traffic environment or a level of the current driving ability.

### [Prior Art Documents]

### [Patent documents]

[Patent document 1] JP 6555649 B2

US 2020/207341 A1 describes that a driving assistance system performs a driver-initiative normal driving assistance mode as a driving assistance for a vehicle.

### [Summary]

### [Problem to be solved]

In the technique disclosed in JP 6555649 B2, in the case where the driver's current driving ability is relatively insufficient, the necessary driving assistance is provided. Thus, safety of vehicle driving is enhanced. However, since the driver has to rely on the vehicle for the insufficient driving ability, this technique cannot maintain or improve the driver's driving ability. For this reason, this technique cannot extend the driver's safe driving life.

The present invention has been made to solve the problem as described above, and therefore has a purpose of providing a vehicle control apparatus capable of maintaining and improving a driver's driving ability.

### [Means for solving the Problem]

The above purpose is achieved by the present invention as defined in independent claims.

According to the invention, in the case where the driver's driving ability is entirely or partially low, the vehicle substitutes for the driving function that exerts the low driving ability. As a result, the function is automatically distributed between the driver and the vehicle in a human-machine system, and the driving performance request is thereby compensated. Just as described, even when the driver's driving ability is low, the vehicle performs the driving function associated with the insufficient driving performance instead. Thus, safety of vehicle travel is ensured, and the driver can extend driving life without giving up driving. In addition, training is provided for the driving function with the low driving performance, which is identified as the insufficient function, by the driving performance assistance processing. Therefore, the driver can maintain or improve the driving ability in regard to the insufficient function.

The driving performance assistance processing may be processing to notify the driver of a vehicle operation to be performed by the driver for the insufficient function. According to the vehicle control apparatus that is configured as described above, the driver learns the vehicle operation to be performed for the insufficient function, and can thereby maintain or improve the driving function.

The plural driving functions of the driver include: a perceptual function to at least perceive the traffic environment and the travel environment; a determination function to determine the vehicle operation to be performed in the traffic environment and the travel environment; and an operation function to perform the vehicle operation to be performed in the traffic environment and the travel environment, and in the driving performance determination processing, it is determined whether the driving performance of each of the perceptual function, the determination function, and the operation function satisfies the driving performance request. According to the vehicle control apparatus that is configured as described above, in the driving performance determination processing, it is determined whether the driver has the specified driving performance for each of the plural driving functions. In this way, it is possible to identify the insufficient function with the low driving performance.

In the driving performance assistance processing, information with a different content may be provided according to each of the plural driving functions of the driver. According to the vehicle control apparatus that is configured as described above, the appropriate assistance information can be provided according to a type of the insufficient function.

### [Advantage]

The vehicle control apparatus according to the present invention can maintain or improve the driver's driving ability.

### [Brief Description of the Drawings]

[Fig. 1] Fig. 1 is an explanatory view of vehicle control in an embodiment of the present invention.
[Fig. 2] Fig. 2 is a block diagram of a vehicle control apparatus in the embodiment of the present invention.
[Fig. 3] Fig. 3 is an explanatory view illustrating a processing procedure by the vehicle control apparatus in the embodiment of the present invention.
[Fig. 4] Fig. 4 is an explanatory view of a conventional human-machine system.
[Fig. 5] Fig. 5 is an explanatory view of a human-machine system in the embodiment of the present invention.
[Fig. 6] Fig.6 is a flowchart of driving assistance control in the embodiment of the present invention.
[Fig. 7] Fig.7 is a flowchart of the driving assistance control in the embodiment of the present invention.
[Fig. 8] Fig.8 is a flowchart of a delay notification processing in the embodiment of the present invention.

### [Embodiments for Carrying Out the Invention]

A description will hereinafter be made on a vehicle control apparatus according to an embodiment of the present invention with reference to the accompanying drawings. All of the features as disclosed in the drawings may not necessarily be essential.

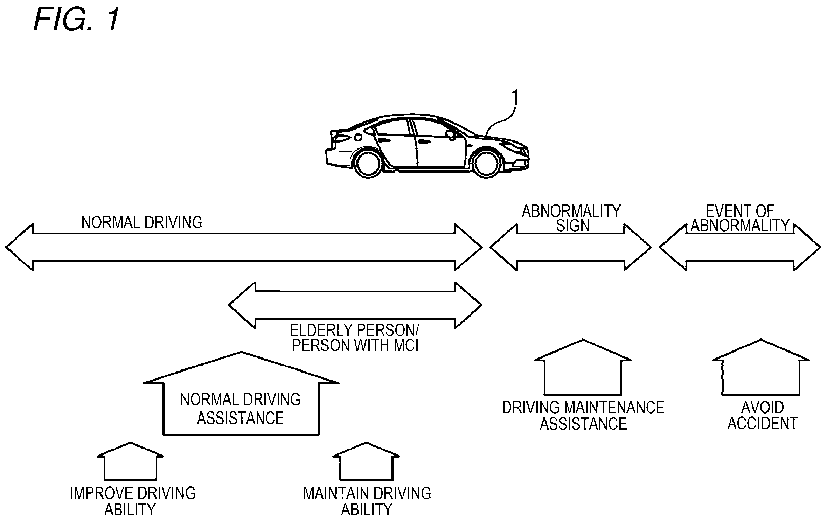

A description will be made on an overview of vehicle control that is provided by the vehicle control apparatus according to the embodiment of the present invention with reference to Fig. 1. Fig. 1 is an explanatory view of the vehicle control.

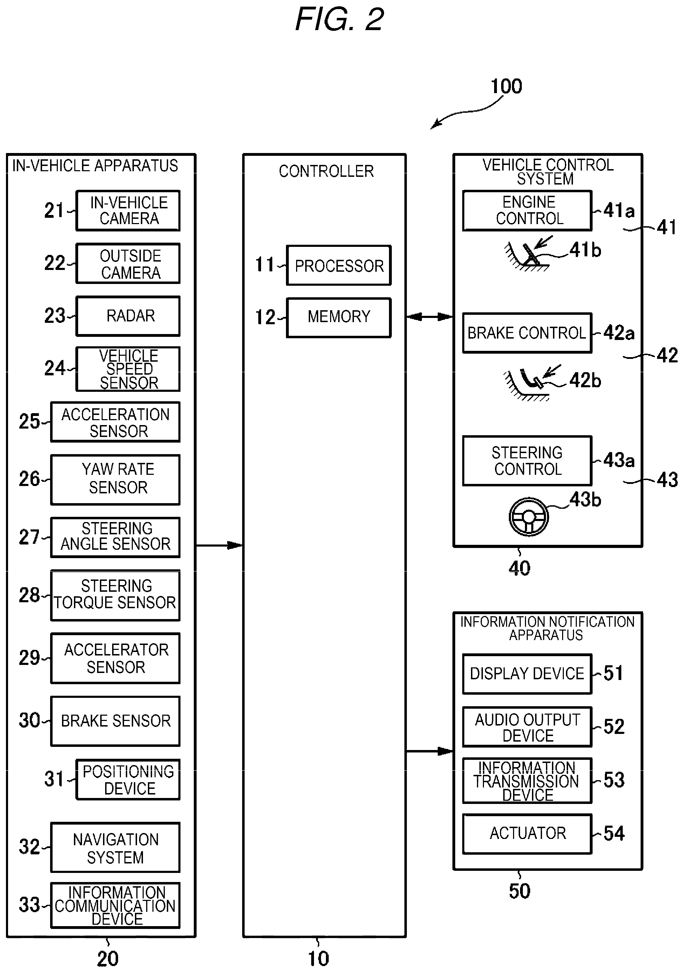

The vehicle control apparatus 100 (see Fig. 2) in this embodiment is configured on a premise that a driver proactively performs a vehicle operation (or an operation) of a vehicle 1. Accordingly, the vehicle control apparatus 100 assists with the vehicle operation of the vehicle 1 in an appropriate level according to the driver's condition. In other words, in this embodiment, in principle, driving assistance control of the vehicle 1 is provided to fill a gap between the vehicle operation that the driver desires to perform and the vehicle operation that the driver can perform. For example, the driver's reduced driving function is primarily assisted. Furthermore, the vehicle control apparatus 100 is configured to automatically switch the vehicle 1 to automated driving control at a specified time.

More specifically, in the case where the driver has normal driving ability, the vehicle control apparatus 100 may intervene in the vehicle operation only at a particular time to execute the driving assistance control (automatic acceleration, automatic braking, automatic steering, or the like). Examples of the particular time are a time when the driver's driving ability is temporarily reduced (for example, due to fatigue or drowsiness) and a time when travel environment is relatively difficult (for example, a surrounding traffic condition is complicated, a road shape is complicated, or surrounding environment is dark). In the case where the driving ability of the driver (for example, an elderly person or a person with mild cognitive impairment (MCI)) is partially reduced (for example, a lack of muscle strength to operate a steering wheel), the vehicle control apparatus 100 may compensate for the reduced driving ability. In addition, the vehicle control apparatus 100 may execute the driving assistance control to maintain or recover the reduced driving ability or to further improve the driving ability.

Meanwhile, in the case where such an abnormality sign is detected that the driver's conscious level or driving ability is reduced rapidly or over a specified period (several minutes to several tens of minutes) (for example, at onset of an acute illness or when a drowsiness level is high), the vehicle control apparatus 100 may execute the driving assistance control to maintain safe travel. In an event of abnormality in which the driver loses consciousness or driving ability, in order to avoid occurrence of an accident, the vehicle control apparatus 100 may execute the automated driving control and may also execute processing to notify outside of an emergency situation.

Next, a description will be made on a configuration of the vehicle control apparatus according to the embodiment of the present invention with reference to Fig. 2. Fig. 2 is a block diagram of the vehicle control apparatus. As illustrated in Fig. 2, the vehicle control apparatus 100 may have, as main components, a controller 10 such as an electronic control unit (ECU), an in-vehicle apparatus 20, a vehicle control system 40, and an information notification apparatus 50.

The in-vehicle apparatus 20 may include at least one of an in-vehicle camera 21, an outside camera 22, a radar 23, and plural vehicle behavior sensors (a vehicle speed sensor 24, an acceleration sensor 25, a yaw rate sensor 26) to detect behavior of the vehicle 1, plural operation detection sensors (a steering wheel angle sensor 27, a steering torque sensor 28, an accelerator operation amount sensor 29, a brake depression amount sensor 30) to detect the driver's operation, a positioning device 31, a navigation system 32, and an information communication device 33.

The vehicle control system 40 may include an engine control system 41, a brake control system 42, and a steering control system 43 that respectively correspond to a running function, a stopping function, and a turning function of the vehicle. The information notification apparatus 50 may include a display device 51, an audio output device 52, an information transmission device 53, and plural actuators 54.

The controller 10 is constructed of a computer device that may include: a processor 11; memory 12 that stores various programs executed by the processor 11 and data; an input/output device; and the like. The controller 10 is configured to output a control signal for executing the vehicle control (the driving assistance control and the automated driving control) to the vehicle control system 40 and the information notification apparatus 50 on the basis of a signal received from the in-vehicle apparatus 20.

The in-vehicle camera 21 captures an image of the driver of the vehicle 1 and outputs image information. Based on this image information, the controller 10 particularly determines a facial expression and an upper body posture of the driver.

The outside camera 22 captures an image around the vehicle 1 (typically, front of the vehicle 1) and outputs image information. Based on this image information, the controller 10 identifies an object and a position thereof on the outside of the vehicle. The objects at least include a traffic participant and a boundary of a travel road. More specifically, the objects include surrounding moving bodies (a vehicle, a pedestrian, and the like) and immobile structures (an obstacle, a parked vehicle, the travel road, a lane marking, a stop line, a traffic signal, a traffic sign, an intersection, and the like).

The radar 23 measures the position and a speed of the object that exists around the vehicle 1 (typically, in front of the vehicle 1). For example, as the radar 23, a millimeter-wave radar, a laser radar (LIDAR), an ultrasonic sensor, or the like can be used.

The vehicle speed sensor 24 detects a speed (a vehicle speed) of the vehicle 1. The acceleration sensor 25 detects acceleration of the vehicle 1. The yaw rate sensor 26 detects a yaw rate generated to the vehicle 1. The steering wheel angle sensor 27 detects a rotation angle (a steering wheel angle) of a steering wheel 43b of the vehicle 1. The steering torque sensor 28 detects rotational torque that is associated with rotation of the steering wheel 43b. The accelerator operation amount sensor 29 detects a depression amount of an accelerator pedal 41b. The brake depression amount sensor 30 detects a depression amount of a brake pedal 42b.

The positioning device 31 may include a GPS receiver and/or a gyroscope sensor, and detects a position of the vehicle 1 (current vehicle position information). The navigation system 32 stores map information therein and can provide the map information to the controller 10. The controller 10 can calculate an entire travel route (including a travel lane, the intersection, the traffic signal, and the like) to a destination on the basis of the map information and the current vehicle position information.

The information communication device 33 communicates with an external communication device. For example, the information communication device 33 performs inter-vehicular communication with another vehicle and road-vehicle communication with an external communication device, receives various pieces of driving information and traffic information (traffic jam information, speed limit information, and the like), and provides the information to the controller 10.

The engine control system 41 controls drive power of an engine system (an internal combustion engine, an electric motor, or the like) of the vehicle 1. The controller 10 drives the engine system by sending a control signal to an engine controller 41a on the basis of input from the accelerator pedal 41b, and can thereby accelerate or decelerate the vehicle 1.

The brake control system 42 controls drive power of a brake system of the vehicle 1. For example, the brake control system 42 includes brake actuators such as a hydraulic pump and a valve unit. The controller 10 drives the brake system by sending a control signal to a brake controller 42a on the basis of input from the brake pedal 42b, and can thereby decelerate the vehicle 1.

The steering control system 43 controls drive power of a steering system of the vehicle 1. The steering control system 43 may include an electric motor for an electric power steering system, and the like, for example. The controller 10 drives the steering system by sending a control signal to a steering controller 43a on the basis of input from the steering wheel 43b, and can thereby change an advancing direction of the vehicle 1.

The display device 51 can visually display assistance information (visual information) for assisting the driver with the vehicle operation in a display area. More specifically, the display device 51 may be a Head-Up Display (HUD). The display area corresponds to size of an entire or partial front windshield of the vehicle 1, and the assistance information is displayed in the driver's field of view. Instead of the HUD, a liquid-crystal display may be used.

The audio output device 52 may be a speaker, for example, and can provide assistance information (auditory information) for assisting the driver with the vehicle operation.

The information transmission device 53 can transmit information on driving assistance to an external information communication device (for example, the driver's mobile information terminal).

The actuators 54 may include an electric motor, a gear mechanism, and the like. The plural actuators 54 are configured to move each of plural operation sections to be operated at the time when the driver drives the vehicle 1 (for example, the accelerator pedal 41b, the brake pedal 42b, and the steering wheel 43b) in an operation direction without the driver's input. The controller 10 outputs a control signal to each of the actuators 54 and can thereby cause the corresponding operation section to demonstrate desired behavior.

The vehicle control system (for example, the engine control system, the brake control system, and the steering control system) in this embodiment may be configured to be actuated by a drive-by-wire method. In addition, the vehicle control system in this embodiment may be configured that the operation input from the operation section is transmitted as a control signal via the controller 10, and a drive unit corresponding to the operation section receives the control signal and is driven on the basis of the control signal. Thus, the controller 10 can output the control signal to the drive unit independently of movement of the operation section by the actuator 54.

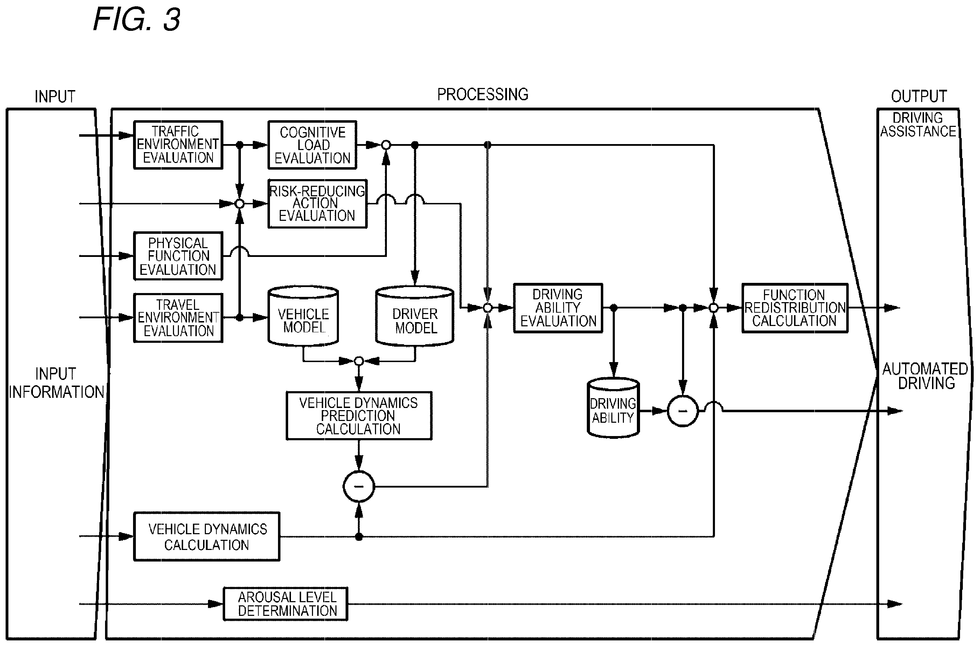

Next, a description will be made on a processing procedure by the vehicle control apparatus according to the embodiment of the present invention with reference to Fig. 3. Fig. 3 is an explanatory view illustrating the processing procedure by the vehicle control apparatus. More specifically, Fig. 3 illustrates that the controller 10 processes input information from the in-vehicle apparatus 20 to provide various types of the vehicle control (the driving assistance control and the automated driving control) by using the vehicle control system 40 and the information notification apparatus 50.

Contents of the vehicle control may be an advanced driver-assistance system (ADAS), the automatic acceleration, the automatic braking, the automatic steering, automatic vehicle posture stabilization control, automated driving (level 3 or higher), and/or maintenance assistance processing and improvement assistance processing for the driver's driving ability. The ADAS may at least include assistance functions for following a preceding vehicle, preventing a collision with the preceding vehicle, preventing lane departure, and the like (automatic entry avoidance control). The automatic vehicle posture stabilization control is control to stabilize a posture of the vehicle 1, that is, vehicle dynamics (a pitch, a roll, and a yaw) and to prevent sideslip, overturning, and the like.

The in-vehicle apparatus 20 may continuously transmit the acquired information to the controller 10. Based on the acquired information, the controller 10 performs the following calculations or makes the following evaluations.

The controller 10 may evaluate traffic environment around the vehicle 1 on the basis of the input information from the outside camera 22, the radar 23, the positioning device 31, the navigation system 32 (the map information), and the like (traffic environment evaluation). More specifically, the controller 10 may calculate the position, a speed, and the like of the object (the vehicle, the pedestrian, a border line, a guard rail, the stop line, the traffic sign, or the like) around the vehicle 1.

In addition, the controller 10 may evaluate the driver's physical function on the basis of information from the steering wheel angle sensor 27, the steering torque sensor 28, the brake depression amount sensor 30, the in-vehicle camera 21, and the like (physical function evaluation). More specifically, the controller 10 may estimate levels of the driver's physical functions to operate the operation section with an appropriate operation amount and at an appropriate operation speed and to visually capture visual stimulation on the outside of the vehicle. Whether the driver operates the operation section with the appropriate operation amount and at appropriate operation speed is evaluated by a difference between a combination of the operation amount and the operation speed (the steering wheel angle, a steering wheel angular velocity, the depression amount, a depression speed, or a brake hydraulic pressure of the brake pedal 42b, or the like) actually input by the driver via the operation section and a combination of a target operation amount and a target operation speed at the time of traveling on a target travel route. Based on a driving request (the destination and the like), the target travel route is calculated by using results of the traffic environment evaluation, a travel environment evaluation, the physical function evaluation, and the like such that the vehicle 1 can travel safely and efficiently.

The controller 10 may evaluate travel environment around the vehicle 1 on the basis of the information from the outside camera 22, the vehicle speed sensor 24, the acceleration sensor 25, the positioning device 31, and the like (the travel environment evaluation). More specifically, the controller 10 may estimate physical quantities (for example, a curve radius and a road surface friction coefficient of the travel road) that affect the vehicle dynamics.

In addition, the controller 10 may calculate the current vehicle dynamics of the vehicle 1 on the basis of the information from the vehicle speed sensor 24, the acceleration sensor 25, the yaw rate sensor 26, and the like (vehicle dynamics calculation). The vehicle dynamics includes the speed, the acceleration, the yaw rate, moment about each rotational axis (pitch, yaw, and roll), and the like.

The controller 10 may determine the driver's arousal level on the basis of the image information from the in-vehicle camera 21 (arousal level determination). For example, the arousal level is evaluated by opening amounts of the driver's eyes and/or mouth and by a position or the posture of the driver's upper body. For example, the arousal level can be evaluated in four levels (zero, low, moderate, and high arousal).

The controller 10 may determine whether there is a predicted risk in the traffic environment evaluation and the travel environment evaluation. The predicted risks may include a traffic risk due to the traffic environment (for example, a collision of the vehicle 1 with the other vehicle) and a travel risk due to the travel environment affecting the vehicle dynamics (for example, spinning on a curved road) . Then, the controller 10 may evaluates risk avoidance action taken by the driver in response to this predicted risk on the basis of the information from the in-vehicle apparatus 20, the in-vehicle camera 21, and the like (risk avoidance action evaluation).

The risks may include a vehicle accident, such as the collision of the vehicle 1, and states where postural stability of the vehicle 1 is lost or reduced (spinning, overturning, and the like). Risk objects causing such a risk include the traffic participants (the other vehicle, the pedestrian, and the like), the guard rail, the border line, the traffic signal (a red light), the stop line, and the like. The risk objects further include risk-generating portions of the travel road (a clipping point on the curved road, and the like). Each of these objects becomes the risk object in such a circumstance where the respective object possibly poses the risk in the near future (for example, within a specified period such as 10 seconds) in the case where the current vehicle behavior (vehicle dynamics) continues. The risk avoidance action is action taken by the driver in response to the predicted risk and, in particular, the vehicle operation (the acceleration, braking, and/or steering) that is performed to reduce a probability of occurrence of the predicted risk. For example, in the case where the predicted routes of the vehicle 1 and the other vehicle intersect and the collision between these vehicles is predicted, the risk avoidance action is the vehicle operation to reduce a collision probability or the vehicle operation to set the closest distance between the vehicle 1 and the other vehicle to be equal to or longer than a specified distance. Furthermore, the object, which is unlikely to pose the risk at a current time point but should be perceived during the travel, and the object, which possibly poses the risk in the future beyond a specified period, may be included as the risk objects.

In addition, the risk avoidance action may include such action that the driver perceives the risk object (for example, the other vehicle with the collision possibility or a location near the clipping point on the curved road) before operating the operation section. For example, the risk avoidance action includes shifting of the driver's sightline to the risk object and shifting of the driver's posture to handle the risk (that is, perception of the risk object by the driver) on the basis of the image information from the in-vehicle camera 21.

The controller 10 may evaluate the driver's current cognitive load on the basis of the result of the traffic environment evaluation (cognitive load evaluation). For example, the controller 10 evaluates that, according to the vehicle speed, the driver's cognitive load is greater as the number of the objects within a specified distance from the vehicle 1 is increased. For example, the cognitive load can be evaluated in three levels (low, moderate, and high). In addition, the controller 10 may analyze and learn the driver's cognitive ability level on the basis of information on the vehicle operation by the driver and the driver's sightline direction, and may then update the driver's cognitive ability level. In this case, the cognitive load evaluation can be calculated as a ratio of a magnitude of the current cognitive load to the driver's cognitive ability level.

The controller 10 may store a vehicle model, which defines physical motion of the vehicle 1, in a storage section. The vehicle model represents a relationship between specifications of the vehicle 1 (mass, wheelbase, and the like) and physical variations (the speed, the acceleration, the steering angle, and the like) by an equation of motion. The result of the travel environment evaluation (for example, the road surface friction coefficient) can also be applied to the vehicle model.

The controller 10 may store a driver model of the driver who drives the vehicle 1 in the storage section. The controller 10 analyzes and learns the driver's operation characteristic on the basis of the input information from the in-vehicle apparatus 20, and constantly updates the driver model. The driver model represents the driver's operation characteristic and includes an operation amount, a reaction delay time (time constant), and the like for a particular operation under a certain condition. The result of the cognitive load evaluation (the magnitude of the cognitive load) and the result of the physical function evaluation can also be applied to the driver model. For example, in a situation where the cognitive load is high, the driver model is corrected to reduce the driver's operating ability. Meanwhile, in the case where it is determined, from the result of the physical function evaluation, that a depression force or arm strength is low, such a determination is reflected in the time constant related to the operation amount and the operation speed of the operation section. By using the driver model, the controller 10 can predict the driver's operation. The controller 10 also stores an ideal driver model, which represents the driver's ideal operation characteristic with the high driving ability, in the storage section, and thus can also predict the ideal operation.

The controller 10 applies the input information from the in-vehicle apparatus 20 to the vehicle model and the driver model, and can thereby calculate the vehicle dynamics that is predicted to be generated in a period from the current time point to the near future (vehicle dynamics prediction calculation). In other words, by inputting current conditions (the traffic environment, the travel environment, the cognitive load, and the physical function) into the driver model and the vehicle model, the controller 10 can predict the vehicle operation (a type of the operation, the operation amount, operation timing, and the like) to be performed by the driver after a specified period (for example, after 10 seconds) from the current time point, and can calculate predicted vehicle dynamics to be generated by the predicted vehicle operation.

Furthermore, the controller 10 makes a driving ability evaluation. The driving ability represents a measure of the driver's ability to avoid the various risks. The controller 10 may evaluate or calculates the driving ability against the risk on the basis of the result of the risk avoidance action evaluation (the risk avoidance action taken by the driver), a difference between the predicted vehicle dynamics and the actual vehicle dynamics, and the result of the cognitive load evaluation (the magnitude of the cognitive load). For example, the driving ability against the risk can be a required risk avoidance time that is required by the driver to avoid the predicted risk. The required risk avoidance time may be a time from initiation of the risk avoidance action to disappearance of the predicted risk or a required time from the driver's perception of the risk to completion of the risk avoidance action. In this case, in the case where the driving ability is evaluated as low, the required risk avoidance time is output as a large value.

For example, the controller 10 uses the driver model to calculate a predictive travel route of the vehicle 1 at a future time point of a case where it is assumed that the current vehicle behavior continues only for a specified time. When the specified time reaches a certain time, the risk can no longer be avoided on the predictive travel route at the time point. Then, a time until occurrence of the risk in the predictive travel route, which is calculated at this time, (a risk margin time) may be set as the required risk avoidance time.

The controller 10 can update driving ability data by using the calculated driving ability evaluation. The driver's driving ability changes over time. For example, the driving ability of a novice driver tends to be improved while the driving ability of the elderly person tends to be reduced. Plural driving ability data sets may be provided in a manner to correspond to plural evaluation periods. For example, the driving ability data sets in a short term (one to six months before the current time point), a medium term (three to nine months before the current time point), and a long term (one to two years before the current time point) can be created.

The controller 10 may perform a function redistribution calculation on the basis of the current vehicle dynamics, the result of the driving ability evaluation (the current driving ability), the result of the cognitive load evaluation, and the result of the physical function evaluation. The controller 10 executes the driving assistance control and/or the automated driving control on the basis of this calculation. During normal driving, the driver (for example, the novice driver or the elderly person) achieves or exerts driving performance by using his/her own driving functions (a perceptual function, a determination function, and the physical function). However, in the case where the driver cannot avoid the predicted risk (that is, in the case where the driver's driving performance does not satisfy the required driving ability to avoid the predicted risk), the controller 10 executes the driving assistance control such that the vehicle 1 performs the driving function, which is related to the insufficient driving ability, instead. Meanwhile, in the event of abnormality (for example, loss of consciousness), for example, the automated driving control is executed, and the driver's driving function is substituted with an equivalent and corresponding function of the vehicle 1.

In addition, the controller 10 may compare the result of the driving ability evaluation (the current driving ability against the predicted risk) to the driving ability data. Then, in the case where the current driving ability is lower than the driving ability in the past, the controller 10 provides assistance (including the automated driving) to compensate for the reduced driving ability. When the driver's arousal level is moderate (for example, the mild drowsiness), the controller 10 executes processing to wake the driver (for example, blowing cool air to the driver). When the driver's arousal level is low (for example, the severe drowsiness or the loss of consciousness), the controller 10 may execute the automated driving.

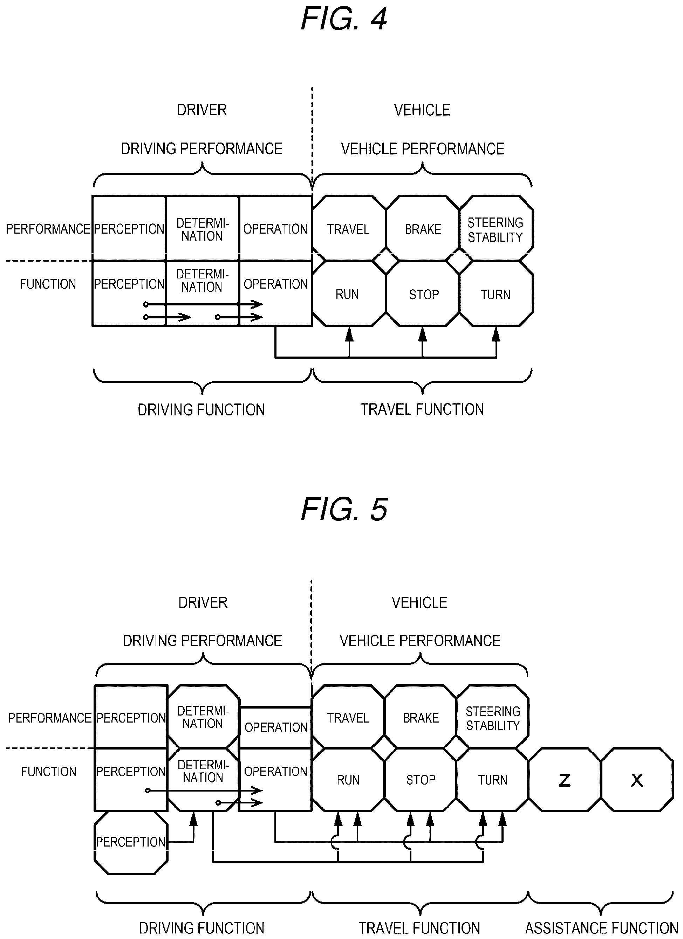

Next, a description will be made on a human-machine system configured to include the driver and the vehicle in the embodiment of the present invention. Fig. 4 is an explanatory view of a conventional human-machine system, and Fig. 5 is an explanatory view of the human-machine system in this embodiment.

As illustrated in Fig. 4, the driver (a human) at least has the perceptual function, the determination function, and an operation function (or the physical function) in relation to driving of the vehicle, and achieves or exerts perceptual performance, determination performance, and operational performance (or motion performance) by using these driving functions. The driver captures the object by using the perceptual function (the perceptual performance), selects or determines the vehicle operation to be performed for the captured object by using the determination function (the determination performance), and performs the selected vehicle operation with the appropriate operation amount and at the appropriate timing by using the operation function (the operational performance). Meanwhile, the vehicle at least has the running function, the stopping function, and the turning function. When these travel functions are used by the driver's vehicle operation, the vehicle achieves or exerts travel performance, braking performance, and steering stability performance to travel.

Just as described, when the driver achieves or exerts the perceptual performance, the determination performance, and the operational performance to operate the vehicle, the vehicle achieves or exerts the travel performance, the braking performance, and the steering stability performance. In this way, the vehicle as the human-machine system can travel safely. Conventionally, in order to efficiently achieve or exert three types of the performance of the vehicle, the vehicle is provided with an interface that mediates between the driver's function and the vehicle function. In this way, overall vehicle performance (for example, braking ability, fuel economy, and the like) is improved.

During the automated driving, the vehicle substitutes for all or most of the perceptual function, the determination function, and the physical function of the driver. For example, the in-vehicle camera, the acceleration sensor, the radar, and the like substitute for the perceptual function. The computer in the vehicle substitutes for the determination function. The in-vehicle actuator substitutes for the physical function. The driver only needs to have the physical function to give a minimum instruction such as an engine start in an exceptional case, and needs not have most of the driving function and the driving ability (the driving performance).

Fig. 5 illustrates an example of the human-machine system in this embodiment. In this embodiment, driving function substitution processing and driving performance assistance processing (maintenance assistance and improvement assistance) are executed. At least one type of the driving performance (perceptional, determination, and operational) related to the driving functions (perceptual, determination, and operation) is in the low level for the driver with the low driving ability (for example, the novice driver or the elderly person). The driving performance of the driver with the average driving ability (a normal driver) can also be in the relatively low level.

In this embodiment, in the case where the driver's driving ability is low at the time of detecting the predicted risk (or at the time of encountering the risk), the vehicle control apparatus 100 may execute the driving function substitution processing to substitute the driving function related to the low driving ability of the driver (an insufficient function) with the corresponding function of the vehicle 1. In this processing, the vehicle control apparatus 100 detects, of the driver's driving functions, the driving function (perceptual, determination, or operation) with low performance, and intervenes in the vehicle operation such that the vehicle 1 only assists this low driving function (the insufficient function). In this way, even when the driver's driving ability is partially reduced, the travel function of the human-machine system, which is configured to include the driver and the vehicle 1, is maintained. In Fig. 5, as an example, the determination function and the determination performance of the driver are substituted with the equivalent function and the equivalent performance of the vehicle 1.

In this embodiment, when executing the driving function substitution processing, the vehicle control apparatus 100 may execute the driving performance assistance processing (first assistance processing) to maintain or recover the driving ability of the insufficient function. Fig. 5 illustrates a Z function for executing this assistance processing. By this processing, the driver is urged to take action to maintain or recover the driving ability in a specified time for the insufficient function among the driver's driving functions (perceptual, determination, and operation). In the case where the driver's driving ability is recovered to such a level in which the predicted risk can be avoided, the driving function substitution processing and the driving performance assistance processing are no longer executed.

In this embodiment, during a normal time when no predicted risk is detected, the vehicle control apparatus 100 executes the driving performance assistance processing (second assistance processing) to improve the driver's driving performance. Fig. 5 illustrates an X function for executing this assistance processing. In this processing, the driver is urged to improve his or her driving ability in a specified time for at least the insufficient function among the driver's driving functions. Fig. 5 illustrates, as an example, a case where the driver's operational performance is lower than a required level.

The second assistance processing is processing to provide the driver with advice on driving action that the driver should perform so as to raise the driver's driving ability to a higher level of the driving ability. For example, a recommended vehicle operation by an experienced driver with the high driving ability is taught to the driver. This corresponds to that the driver learns a driving technique from the experienced driver. With this assistance processing, the driver learns a model vehicle operation for the poor function among the perceptual function, the determination function, and the operation function, and can thereby improve his/her driving ability.

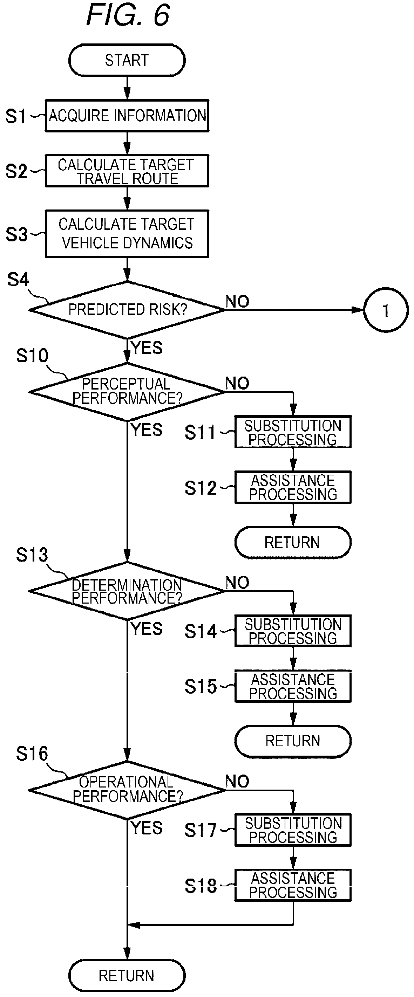

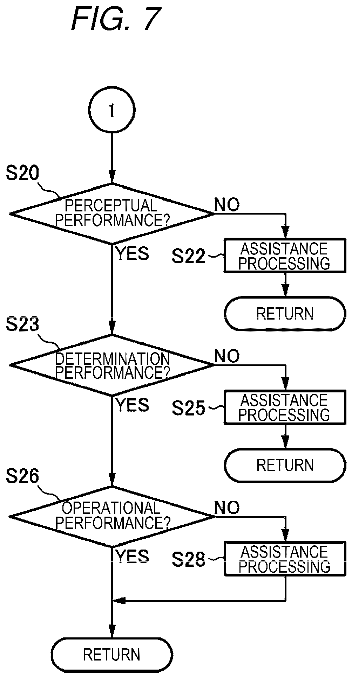

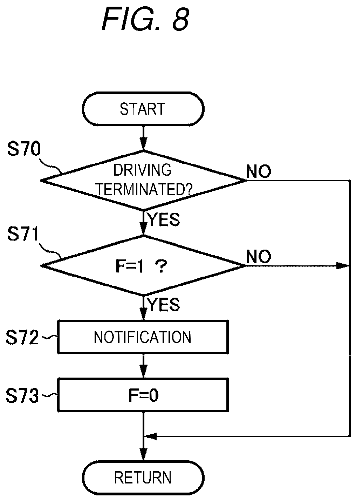

Next, a description will be made on a processing flow of the driving assistance control by the vehicle control apparatus according to the embodiment of the present invention. Fig. 6 and Fig. 7 are flowcharts of the driving assistance control, and Fig. 8 is the flowchart of delay notification processing. After receiving the driving request (the destination and the like) from the driver or the outside via an input device (for example, the navigation system 32 or the information communication device 33), the controller 10 repeatedly executes the driving assistance control (for example, every 0.1 second).

First, as illustrated in Fig. 6, the controller 10 may acquire the information from the in-vehicle apparatus 20 every specified time (for example, every 0.1 second) (S1). Based on the acquired information, the controller 10 may execute the processing such as the traffic environment evaluation, the travel environment evaluation, the physical function evaluation, the risk avoidance action evaluation, and the vehicle dynamics calculation.

Then, the controller 10 may calculate the target travel route on the basis of the acquired information and the driving request (S2). The target travel route may include at least one of: a target travel path (positional information at plural positions) in a specified period (for example, 10 seconds) from the current time point; the speed at each position on the path; and the like. By using the driving request and the results of the traffic environment evaluation, the travel environment evaluation, the physical function evaluation, and the like, the controller 10 calculates the target travel route with specified levels of safety and travel efficiency. The controller 10 can calculate plural target travel routes, each of which satisfies a specified constraint condition (for example, that lateral acceleration is equal to or lower than a specified value). For example, in the case where the obstacle exists ahead of the vehicle 1, the controller 10 can set the plural target travel routes to avoid the obstacle. Here, even when the vehicle 1 moves away from the target travel route, the vehicle 1 can travel on another travel route. However, since the other travel route does not satisfy a specified standard, the driving efficiency and ride comfort thereon are poor.

Then, the controller 10 may calculate target vehicle dynamics for travel on the target travel route (S3). The target vehicle dynamics may include the speed, the acceleration, the yaw rate, the moment about each rotational axis (pitch, yaw, and roll), and the like at each of the positions on the target travel route. The target vehicle dynamics is a target control value that is used when the vehicle 1 executes the driving assistance control and the automated driving control. Plural types of the target vehicle dynamics (or the plural target control values) can be set in a manner to correspond to the plural target travel routes.

Furthermore, the controller 10 may calculate an operation amount of a target vehicle operation (the accelerator operation amount, a brake depression amount, the steering wheel angle, or the like) that is a driving performance request for the driver and the vehicle 1 in order to achieve a physical quantity of the target vehicle dynamics at each of the positions on the target travel route, or calculates the control signal for the vehicle control system 40 (human-machine performance request setting processing). The driving performance request with a specified range is set due to the plural target travel routes.

Next, the controller 10 may determine whether the predicted risk is present (S4). More specifically, based on the traffic environment evaluation, the travel environment evaluation, and the like, the controller 10 may determine whether the current vehicle behavior (vehicle dynamics) possibly poses the risk within a specified time. The controller 10 calculates a time from the current time point to the occurrence of the predicted risk (the traffic risk or the travel risk) (that is, a risk margin time TTR (time to risk)). If the risk margin time TTR is less than the specified time (for example, 10 seconds), it is determined that the predicted risk is present. The risk margin time TTR is an expected time until the vehicle 1 enters a risk area in the case where the vehicle 1 maintains the current vehicle behavior (the vehicle dynamics such as the speed and the acceleration). The entry to the risk area means the collision of the vehicle 1 with the other vehicle or a position, at which spinning of the vehicle 1 is predicted, in the curved road, for example.

A description will be made on a case where the predicted risk is present (S4: YES). In this case, the controller 10 determines whether each of the driving functions (the perceptual function, the determination function, and the operation function) achieves or exerts the driving performance necessary to avoid the risk (driving performance determination processing).

First, in regard to the perceptual function, the controller 10 determines whether the driver achieves or exerts the perceptual performance in order to prevent the vehicle 1 from moving away from the target travel route (S10). More specifically, based on the result of the risk avoidance action evaluation, the controller 10 may determine whether the risk object is perceived (for example, whether the driver moves his/her sightline to the risk object, or whether the driver tilts his/her head or upper body in response to the lateral G) by specified time (for example, by a specified time before predicted occurrence time of the predicted risk, or by the time when the vehicle 1 moves away from any of the target travel routes).

If the driver does not exert the perceptual performance (S10: NO), the controller 10 identifies the driver's perceptual function as the insufficient function, and executes the driving function substitution processing to substitute the driver's perceptual function with the corresponding function of the vehicle 1 (S11). In this processing, the controller 10 sets the detected risk object as a tracking object and executes tracking control.

Then, the controller 10 may execute the first assistance processing to maintain the perceptual performance (S12). In order to bring the driver's driving performance (perceptual performance) close to the level in which the vehicle 1 can travel on the target travel route, the controller 10 uses the information notification apparatus 50 to notify the driver of the presence of the risk object to be perceived for the travel on the target travel route. In this way, the driver is urged to take action of perceiving the risk object by using his or her own eyes. In this embodiment, the vehicle operation may include the driver's action to perceive the risk object. More specifically, the controller 10 uses the display device 51 to highlight the risk object in the display area. In addition, the controller 10 uses the audio output device 52 to notify of appearance of the risk object by voice(such as "An obstacle is present ahead.", or the like). When the driver is urged by such notification and repeats the action to perceive the risk object, the driver's perceptual performance can be maintained or recovered.

On the other hand, if the driver exerts the perceptual performance (S10: YES), the controller 10 determines whether the driver achieves or exerts the determination performance for the determination function (S13). More specifically, based on the result of the risk avoidance action evaluation, the controller 10 may determine whether the driver has made an appropriate determination to avoid the risk and initiated recommended risk avoidance action by the above specified time. The recommended risk avoidance action is the target vehicle operation (for example, an accelerator, brake, or steering operation) for the target vehicle dynamics. Once the target vehicle dynamics is achieved, the risk is avoided. For example, in the case where the brake operation is required to avoid a collision with the obstacle in front, the controller 10 determines whether the brake operation has been initiated on the basis of the information from the brake depression amount sensor 30. Meanwhile, in the case where the steering operation is required to avoid the collision with the obstacle in front, the controller 10 determines whether the steering operation has been initiated on the basis of the information from the steering wheel angle sensor 27.

If the driver does not exert the determination performance (S13: NO), the controller 10 identifies the driver's determination function as the insufficient function, and executes the driving function substitution processing to substitute the driver's determination function with the corresponding function of the vehicle 1 (S14). In this processing, the controller 10 may execute the vehicle control to disable the vehicle operation by the driver or override the vehicle operation by the driver with another vehicle operation so as to avoid the risk. In the drive-by-wire vehicle 1, even when the driver operates the operation section, due to disablement of the vehicle operation, the control signal is no longer generated on the basis of the operation of the operation section.

For example, in the case where the obstacle in front is avoided, it is assumed that the driver performs the steering operation to drive by a side of the obstacle. Meanwhile, since an oncoming vehicle is approaching, the target vehicle operation is deceleration by the brake operation (that is, the target travel route is set to a route on which the vehicle 1 is decelerated before reaching the obstacle). In this situation, the controller 10 disables the steering operation, and outputs the control signal to the brake controller 42a so as to stop the vehicle 1 before reaching the obstacle. On the contrary, in the case where the target vehicle operation is the steering operation but the driver performs the brake operation, the controller 10 may disable the brake operation, and outputs the control signal to the steering controller 43a so as to avoid the obstacle.

Then, the controller 10 may execute the first assistance processing to maintain the determination performance (S15). In this embodiment, at a time point of the processing in step S15, the controller 10 stores driving operation assistance information in the memory 12, and sets an assistance flag F to "1". Then, in order to bring the driver's driving performance (determination performance) close to the level in which the vehicle 1 can travel on the target travel route, the controller 10 uses the information notification apparatus 50 after termination of driving, so as to notify the driver of the driving operation assistance information. The driving operation assistance information includes information on the vehicle operation that is performed by the driver in response to the risk and information on the target vehicle operation to be performed by the driver in response to the risk.

As the driving operation assistance information, the vehicle operation performed by the driver (in the above example, the operation of the steering wheel 43b or the operation of the brake pedal 42b) and the target vehicle operation (the operation of the brake pedal 42b or the operation of the steering wheel 43b) are stored. This information may include a lapse of time of the operation amount of the operation section (the brake pedal 42b, the steering wheel 43b, or the like). This information may further include the image information, which shows an operation status of the operation section by the driver, from the in-vehicle camera 21 and the image information, which includes the risk object, from the outside camera 22.

As illustrated in Fig. 8, if driving of the vehicle 1 is terminated (S70: YES), the controller 10 may determine whether the assistance flag F is set to "1" (S71). If the assistance flag F is "1" (S71: YES), the controller 10 may use the information transmission device 53 to transmit the stored driving operation assistance information to the driver's mobile information terminal registered in the memory 12 (S72), and sets the assistance flag F to "0" (S73). In addition, the controller 10 may use the display device 51 to show the driving operation assistance information. For example, the controller 10 can determine that driving is terminated when detecting an engine off (IG off) signal of the vehicle 1 and/or when detecting the zero speed of the vehicle 1.

By this processing, the driver can compare the vehicle operation actually performed by the driver to the target vehicle operation to be performed by the driver while recalling a travel situation where a driving determination has been inappropriate. In this way, the driver does not degrade but can at least maintain the driving performance for the determination function according to the travel situation.

The driver may be notified of the driving operation assistance information during the travel of the vehicle 1. However, there is a possibility that the driver who is notified of the assistance information gets confused. Thus, in this embodiment, the driver is notified of the assistance information of the determination function after the termination of driving.

On the other hand, if the driver exerts the determination performance (S13: YES), the controller 10 may determine whether the driver achieves or exerts the operational performance for the operation function (S16). More specifically, the controller 10 may determine whether the driver has appropriately executed the vehicle operation for the risk avoidance action (mainly, whether a vehicle operation amount is appropriate) so as to reduce the probability of occurrence of the predicted risk to zero. Accordingly, the controller 10 calculates the probability of occurrence of the predicted risk by using the vehicle model in consideration of a change in the vehicle dynamics caused by the risk avoidance action in addition to the current vehicle dynamics.

If the driver exerts the operational performance (S16: YES), the probability of occurrence of the predicted risk becomes zero within the specified time, and thus the controller 10 terminates the processing. On the other hand, in the case where the driver selects and executes the correct vehicle operation to avoid the risk but the vehicle operation amount is insufficient, the predicted risk is still not avoided.

Accordingly, if the driver does not exert the operational performance (S16: NO), the controller 10 may identify the driver's operation function as the insufficient function, and may execute the driving function substitution processing to substitute the driver's operation function with the corresponding function of the vehicle 1 (S17). In this processing, the controller 10 executes the vehicle control to avoid the risk. For example, in the case where the driver depresses the brake pedal 42b to avoid the collision with the obstacle but the depression amount is insufficient due to the small depression force by the driver, the controller 10 may output the control signal corresponding to the appropriate operation amount to the brake controller 42a such that the vehicle 1 stops before reaching the obstacle. Meanwhile, in the case where the driver operates the steering wheel 43b to avoid the collision with the obstacle but the operation amount thereof is insufficient due to the low arm strength of the driver, in order to secure a clearance from the obstacle, the controller 10 outputs the control signal corresponding to the appropriate operation amount to the steering controller 43a.

Then, the controller 10 may execute the first assistance processing to maintain the operational performance (S18). In order to bring the driver's driving performance (operational performance) close to the level in which the vehicle 1 can travel on the target travel route, the controller 10 may uses the information notification apparatus 50 to notify the driver of the appropriate operation amount and the appropriate operation timing for the travel on the target travel route by the movement of the operation section. In this way, the driver learns the appropriate operation and can at least maintain the driving performance for the operation function. More specifically, the controller 10 uses the actuator 54 to move the operation section (for example, the brake pedal 42b or the steering wheel 43b) for the intervened vehicle control to an operating position that corresponds to the appropriate operation amount.

Next, a description will be made on a case where the predicted risk is not present (S4: NO). In this case, the controller 10 determines whether each of the driving functions (the perceptual function, the determination function, and the operation function) exerts the driving performance in a specified level (the driving performance determination processing).

First, in regard to the perceptual function, the controller 10 may determine whether the driver exerts the perceptual performance that is necessary to travel on the target travel route (or necessary to perform the target vehicle operation) (S20). The controller 10 may set the object to be perceived on the basis of the specified traffic environment (for example, travel of the other vehicle around the vehicle 1) and the specified travel environment (for example, entering the curved road). Then, in the case where the driver does not perceive the object to be perceived at appropriate timing, the controller 10 may determine that the driver does not appropriately exert the necessary perceptual performance. The object to be perceived is set by analyzing and learning data on behavior of the experienced driver during driving (a sightline, a posture, and the like). An example of the case where it is determined that the driver does not appropriately exert the necessary perceptual performance is a case where the driver does not perceive a target, overspeeding, external G, or the like to be perceived. For example, the controller 10 makes the above determination on the basis of the image information from the in-vehicle camera 21.

For example, in the case where the driver is not seeing the target (for example, the other vehicle or the pedestrian) that exists on the right or in front when making a right turn at an intersection on a left-hand traffic road, it is determined that the driver does not perceive the target to be perceived. In addition, in the case where the vehicle speed exceeds a proper speed on the curved road, it is determined that the driver does not perceive overspeeding. Furthermore, in the case where the driver does not assume the appropriate driving posture (for example, tilts his/her upper body and head in response to the lateral G) during the travel on the curved road, it is determined that the driver does not perceive the external G. Here, in the case where the object for which the perceptual function should be exerted is not present, it is determined YES in step S20.

If the driver does not exert the perceptual performance (S20: NO), the controller 10 identifies the driver's perceptual function as the insufficient function, and executes the second assistance processing to improve the perceptual performance (S22). In order to bring the driver's driving performance (perceptual performance) close to the level in which the vehicle 1 can travel on the target travel route, the controller 10 may use the information notification apparatus 50 to notify the driver of an exertion mode of the perceptual function by the experienced driver with the high driving ability to travel on the target travel route. In this way, the driver learns model perceptual action (a perceived object, timing, and the like) of the experienced driver, and can thereby improve the perceptual performance. In this embodiment, the vehicle operation includes the perceptual action.

For example, in the case where the driver does not perceive the target to be perceived when making the right turn, the controller 10 visually highlights the target to be perceived in the display area of the display device 51. Alternatively, the controller 10 may notify of the target to be perceived by using the audio output device 52.

In the case where the driver does not perceive overspeeding, the controller 10 may limit the driver's viewable range in front of the vehicle to a narrower range. In this case, the display device 51 may darken (or reduces transparency of) a portion of the display area that corresponds to a peripheral portion of the front windshield and thereby narrows the range where the driver can see the outside through the front windshield. As a result, the driver feels a fast moving speed of outside scenery within the narrow viewable range. Thus, the driver can easily notice overspeeding of the vehicle 1. The controller 10 may notify of an overspeed state of the vehicle 1 by using the display device 51 or the audio output device 52.

In the case where the driver does not perceive the external G, the controller 10 may use the display device 51 or the audio output device 52 to notify the driver that the external G is applied to the vehicle 1 and also to notify the posture to be assumed by the driver.

On the other hand, if the driver exerts the perceptual performance (S20: YES), the controller 10 determines whether the driver exerts the determination performance for the determination function (S23). More specifically, the controller 10 may determine whether the driver has selected and initiated the target vehicle operation (for example, the accelerator, brake, or steering operation) and that the driver does not execute the different vehicle operation from the target vehicle operation. The different vehicle operation from the target vehicle operation include an unnecessary and wasteful vehicle operation (for example, whether the driver wastefully meanders on a straight road).

If the driver does not exert the determination performance (S23: NO), the controller 10 identifies the driver's determination function as the insufficient function, and executes the second assistance processing to improve the determination performance (S25). In this case, the controller 10 does not disable or override the driver's vehicle operation with the other vehicle operation.

For example, in the case where the driver once operates the steering wheel in a left turning direction and thereafter operates the steering wheel in a right turning direction when making the right turn, as described in step S15, the controller 10 may store the driving operation assistance information in the memory 12, and set the assistance flag F to "1". Then, as it has already been described with reference to Fig. 8, in order to bring the driver's driving performance (determination performance) close to the level in which the vehicle 1 can travel on the target travel route, the controller 10 may use the information notification apparatus 50 to notify the driver of the driving operation assistance information after termination of driving. In this case, the driving operation assistance information includes information on the vehicle operation that is performed by the driver when making the right turn (a left turning operation) and information on the target vehicle operation to be performed by the driver when making the right turn.

For example, in the case where initiation timing of the brake operation or the steering operation by the driver is late on the curved road, the driving operation assistance information includes information on the vehicle operation by the driver on the curved road and information on the target vehicle operation to be performed by the driver on the curved road.

By this processing, the driver learns model determination action of the experienced driver to travel on the target travel route, and can thereby improve the determination performance. The driver may be notified of the driving operation assistance information during the travel of the vehicle 1. However, due to such a possibility that the driver who is notified of the assistance information gets confused, in this embodiment, the driver is notified of the assistance information of the determination function after the termination of driving.

On the other hand, if the driver exerts the determination performance (S23: YES), the controller 10 determines whether the driver exerts the operational performance for the operation function (S26). More specifically, the controller 10 may determine whether the vehicle operation is appropriately performed (mainly, whether the vehicle operation amount is appropriate). Furthermore specifically, the controller 10 determines whether a difference between the target operation amount and the actual operation amount by the driver is equal to or greater than a specified threshold, or whether the actual travel route is shifted from the target travel route by a threshold or greater due to the difference in the operation amount (or whether the actual vehicle dynamics is shifted from the target vehicle dynamics by a threshold or greater).

If the driver exerts the operational performance (S26: YES), the controller 10 terminates the processing. If the driver does not exert the operational performance (S26: NO), the controller 10 identifies the driver's operation function as the insufficient function, and executes the second assistance processing to improve the operational performance (S28). In this assistance processing, in order to bring the driver's driving performance (operational performance) close to the level in which the vehicle 1 can travel on the target travel route, the controller 10 uses the information notification apparatus 50 to notify the driver of the appropriate operation amount and the appropriate operation speed of the operation section for the travel on the target travel route. In this way, the driver learns model operation action (the operation amount, the operation speed, and the like) of the experienced driver, and can thereby improve the operational performance.

For example, in the case where the driver rotates the steering wheel 43b to the right when making the right turn, but a rotational operation amount is small due to the low arm strength of the driver, and the actual travel route is shifted away from the target travel route, the controller 10 can use the display device 51 and/or the audio output device 52 to notify the driver that a rotational operation speed of the steering wheel 43b is low and to notify the driver of the actual operation amount, the target operation amount, visual expression of the actual route and the target travel route, and the like.

For example, in the case where the driver depresses the brake pedal 42b on the curved road, but the depression speed is low due to the small depression force of the driver, and the actual travel route is located on an outer side of the target travel route, the controller 10 can use the display device 51 and/or the audio output device 52 to notify the driver that the depression speed of the brake pedal 42b is low and to notify the driver of the actual operation speed, the target operation speed, the visual expression of the actual route and the target travel route, and the like.

A description will hereinafter be made on operational effects of the vehicle control apparatus 100 according to the embodiment of the present invention.

The vehicle control apparatus 100 in this embodiment executes the driving assistance control for the vehicle 1 such that the vehicle 1 travels according to the traffic environment and the travel environment around the vehicle 1. The vehicle 1 travels by using the plural travel functions, which are the running function, the stopping function, and the turning function, by the vehicle operation using the driver's plural driving functions. The vehicle control apparatus 100 executes: the human-machine performance request setting processing (S3) to set the driving performance request that is required for the travel of the vehicle 1 in the traffic environment and the travel environment; the driving performance determination processing (S10, S13, S16, S20, S23, S26) to determine whether the driving performance of each of the plural driving functions of the driver satisfies the driving performance request; the insufficient function identification processing (S10, S13, S16, S20, S23, S26) to identify, of the plural driving functions of the driver, the driver's driving function with the driving performance not satisfying the driving performance request as the insufficient function; the driving function substitution processing (S11, S14, S17) to control the vehicle such that the vehicle 1 performs the identified insufficient function instead; and the driving performance assistance processing (S12, S15, S18, S22, S25, S28) to provide the driver with the information so as to bring the driving performance for the identified insufficient function close to the level in the driving performance request, and causes the driver and the vehicle 1 to exert the driving performance request by executing the driving function substitution processing and/or the driving performance assistance processing.

In this embodiment that is configured as described above, in the case where the driver's driving ability is entirely or partially low, the vehicle 1 performs the driving function, which exerts the low driving ability, instead. As a result, in this embodiment, the function is automatically distributed between the driver and the vehicle 1 in the human-machine system, and the driving performance request is thereby compensated. Just as described, in this embodiment, even when the driver's driving ability is low, the vehicle 1 performs the driving function associated with the insufficient driving performance instead. Thus, in this embodiment, the safety of the vehicle travel is ensured, and the driver can extend driving life without giving up driving. In addition, in this embodiment, training is provided for the driving function with the low driving performance, which is identified as the insufficient function, by the driving performance assistance processing. In this way, in this embodiment, the driver can maintain or improve the driving ability in regard to the insufficient function.

In this embodiment, preferably, the driving performance assistance processing is processing to notify the driver of the vehicle operation to be performed by the driver for the insufficient function. In this embodiment that is configured as described above, the driver learns the vehicle operation to be performed for the insufficient function, and can thereby maintain or improve the driving function.

In this embodiment, the plural driving functions of the driver include: the perceptual function to at least perceive the traffic environment and the travel environment; the determination function to determine the vehicle operation to be performed in the traffic environment and the travel environment; and the operation function to perform the vehicle operation to be performed in the traffic environment and the travel environment. In the driving performance determination processing, it is determined whether the driving performance for each of the perceptual function, the determination function, and the operation function satisfies the driving performance request. In this embodiment that is configured as described above, in the driving performance determination processing, it is determined whether the driver has the specified driving performance for each of the plural driving functions. In this way, in this embodiment, it is possible to identify the insufficient function with the low driving performance.

In this embodiment, preferably, in the driving performance assistance processing, information in a different aspect is provided according to each of the plural driving functions of the driver. In this embodiment that is configured as described above, the appropriate assistance information can be provided according to the type of the insufficient function.

### [Description of Reference Signs and Numerals]

1 Vehicle
10 Controller
20 In-vehicle apparatus
40 Vehicle control system
50 Information notification apparatus
100 Vehicle control apparatus

## Claims

1. A vehicle control apparatus (100) configured to execute driving assistance control for a vehicle (1) such that the vehicle (1) travels according to traffic environment and travel environment around the vehicle (1), the vehicle (1) being configured to travel by using plural travel functions, which include a running function, a stopping function, and a turning function, by a vehicle operation using plural driving functions of a driver, wherein the traffic environment includes a position and/or a speed of an object around the vehicle (1) and the travel environment includes physical quantities that affect vehicle dynamics, the vehicle control apparatus (100) being configured to execute:
human-machine performance request setting processing to set a driving performance request that is requested for the vehicle (1) to travel in the traffic environment and the travel environment;
driving performance determination processing to determine whether driving performance of each of the plural driving functions of the driver satisfies the driving performance request; and
insufficient function identification processing to identify, of the plural driving functions of the driver, the driver's driving function with the driving performance not satisfying the driving performance request as an insufficient function,
wherein
the vehicle control apparatus (100) is configured to further execute:
driving function substitution processing to control the vehicle (1) such that the vehicle (1) performs the identified insufficient function instead; and
driving performance assistance processing to provide the driver with information so as to bring the driving performance of the identified insufficient function close to a level of the driving performance request,
the vehicle control apparatus is configured to execute the driving function substitution processing and the driving performance assistance processing to make the driver and the vehicle (1) exert the driving performance request,
the plural driving functions of the driver include: a perceptual function to at least perceive the traffic environment and the travel environment; a determination function to determine the vehicle operation to be performed in the traffic environment and the travel environment; and an operation function to perform the vehicle (1) operation to be performed in the traffic environment and the travel environment, and
in the driving performance determination processing, it is determined whether the driving performance of each of the perceptual function, the determination function, and the operation function satisfies the driving performance request.

2. The vehicle control apparatus (100) according to claim 1, wherein
the driving performance assistance processing is processing to notify the driver of a vehicle operation to be performed by the driver for the insufficient function.

3. The vehicle control apparatus (100) according to claim 1 or 2, wherein
in the driving performance assistance processing, information with a different content is provided according to each of the plural driving functions of the driver.

4. The vehicle control apparatus (100) according to any one of the preceding claims, wherein
the driving performance request includes at least one of a target speed, a target acceleration, a target yaw rate, and a target moment.

5. A vehicle (1) comprising the vehicle control apparatus (100) according to any one of the preceding claims, wherein the vehicle (1) is configured to travel by using plural travel functions, which include a running function, a stopping function, and a turning function, by an operation using plural driving functions of a driver, and the vehicle (1) comprising the vehicle control apparatus (100) according to any one of the preceding claims.

6. A driving assistance method of controlling a vehicle (1) such that the vehicle (1) travels according to traffic environment and travel environment around a vehicle (1), wherein the vehicle (1) is configured to travel by using plural travel functions, which include a running function, a stopping function, and a turning function, by a vehicle operation using plural driving functions of a driver, and wherein the traffic environment includes a position and/or a speed of an object around the vehicle (1) and the travel environment includes physical quantities that affect vehicle dynamics, the method comprising:
setting a driving performance request that is requested for the vehicle (1) to travel in the traffic environment and the travel environment;
determining whether driving performance of each of the plural driving functions of the driver satisfies the driving performance request;
identifying, of the plural driving functions of the driver, the driver's driving function with the driving performance not satisfying the driving performance request as an insufficient function; and
executing, to make the driver and the vehicle (1) to exert the driving performance request, driving function substitution processing to control the vehicle (1) such that the vehicle (1) performs the identified insufficient function, and driving performance assistance processing to provide the driver with information so as to bring the driving performance of the identified insufficient function close to a level of the driving performance request,
wherein
the plural driving functions of the driver include: a perceptual function to at least perceive the traffic environment and the travel environment; a determination function to determine the vehicle operation to be performed in the traffic environment and the travel environment; and an operation function to perform the vehicle (1) operation to be performed in the traffic environment and the travel environment, and
in the driving performance determination processing, it is determined whether the driving performance of each of the perceptual function, the determination function, and the operation function satisfies the driving performance request.

7. The method according to claim 6, wherein
the driving performance assistance processing is processing to notify the driver of a vehicle operation to be performed by the driver for the insufficient function.

8. The method according to any one of claims 6 or 7, wherein
in the driving performance assistance processing, information with a different content is provided according to each of the plural driving functions of the driver.

9. The method according to any one of claims 6 to 8, wherein
the driving performance request includes at least one of a target speed, a target acceleration, a target yaw rate, and a target moment.

## Patentansprüche

1. Fahrzeugsteuerungs- bzw. -regelungsvorrichtung (100), die konfiguriert ist, eine Fahrassistenzsteuerung bzw. -regelung für ein Fahrzeug (1) auszuführen, sodass sich das Fahrzeug (1) gemäß einer Verkehrsumgebung und Bewegungsumgebung um das Fahrzeug (1) herum bewegt, wobei das Fahrzeug (1) konfiguriert ist, sich unter Verwendung mehrerer Bewegungsfunktionen, die eine Lauffunktion, eine Stoppfunktion und eine Lenk- bzw. Wendefunktion beinhalten, durch eine Fahrzeugbedienung unter Verwendung mehrerer Fahrfunktionen eines Fahrers zu bewegen, wobei die Verkehrsumgebung eine Position und/oder Geschwindigkeit eines Objekts um das Fahrzeug (1) herum beinhaltet und die Bewegungsumgebung physikalische Größen beinhaltet, die eine Fahrzeugdynamik beeinflussen, wobei die Fahrzeugsteuerungs- bzw. -regelungsvorrichtung (100) konfiguriert ist, auszuführen:
Mensch-Maschine-Leistungsanforderung-Einstellungsverarbeitung, um eine Fahrleistungsanforderung einzustellen, die für das Bewegen des Fahrzeugs (1) in der Verkehrsumgebung und der Bewegungsumgebung angefordert wird;
Fahrleistungsbestimmungsverarbeitung, um zu bestimmen, ob eine Fahrleistung jeder der mehreren Fahrfunktionen des Fahrers die Fahrleistungsanforderung erfüllt; und
Unzureichende-Funktionen-Identifizierungsverarbeitung, um von den mehreren Fahrfunktionen des Fahrers die Fahrfunktion des Fahrers mit der Fahrleistung, welche die Fahrleistungsanforderung nicht erfüllt, als eine unzureichende Funktion zu identifizieren,
wobei
die Fahrzeugsteuerungs- bzw. -regelungsvorrichtung (100) konfiguriert ist, ferner auszuführen:
Fahrfunktionssubstitutionsverarbeitung, um das Fahrzeug (1) so zu steuern bzw. zu regeln, dass das Fahrzeug (1) stattdessen die identifizierte unzureichende Funktion durchführt; und
Fahrleistungsassistenzverarbeitung, um dem Fahrer Informationen bereitzustellen, um die Fahrleistung der identifizierten unzureichenden Funktion nahe an ein Niveau der Fahrleistungsanforderung zu bringen,
wobei die Fahrzeugsteuerungs- bzw. -regelungsvorrichtung konfiguriert ist, die Fahrfunktionssubstitutionsverarbeitung und die Fahrleistungsassistenzverarbeitung auszuführen, damit der Fahrer und das Fahrzeug (1) die Fahrleistungsanforderung aufbringen bzw. erfüllen,
die mehreren Fahrfunktionen des Fahrers beinhalten: eine Wahrnehmungsfunktion, um zumindest die Verkehrsumgebung und die Bewegungsumgebung wahrzunehmen; eine Bestimmungsfunktion, um die in der Verkehrsumgebung und der Bewegungsumgebung durchzuführende Fahrzeugbedienung zu bestimmen; und eine Bedienfunktion, um die in der Verkehrsumgebung und der Bewegungsumgebung durchzuführende Bedienung des Fahrzeugs (1) durchzuführen, und
bei der Fahrleistungsbestimmungsverarbeitung bestimmt wird, ob die Fahrleistung von jeder der Wahrnehmungsfunktion, der Bestimmungsfunktion und der Bedienfunktion die Fahrleistungsanforderung erfüllt.

2. Fahrzeugsteuerungs- bzw. -regelungsvorrichtung (100) nach Anspruch 1, wobei
die Fahrleistungsassistenzverarbeitung eine Verarbeitung ist, um den Fahrer über eine von dem Fahrer für die unzureichende Funktion durchzuführende Fahrzeugbedienung zu benachrichtigen.

3. Fahrzeugsteuerungs- bzw. -regelungsvorrichtung (100) nach Anspruch 1 oder 2, wobei
bei der Fahrleistungsassistenzverarbeitung Informationen mit unterschiedlichem Inhalt gemäß jeder der mehreren Fahrfunktionen des Fahrers bereitgestellt werden.

4. Fahrzeugsteuerungs- bzw. -regelungsvorrichtung (100) nach einem der vorhergehenden Ansprüche, wobei
die Fahrleistungsanforderung zumindest eines von einer Sollgeschwindigkeit, einer Sollbeschleunigung, einer Sollgiergeschwindigkeit und eines Sollmoments beinhaltet.

5. Fahrzeug (1) umfassend die Fahrzeugsteuerungs- bzw. -regelungsvorrichtung (100) nach einem der vorhergehenden Ansprüche, wobei das Fahrzeug (1) konfiguriert ist, sich unter Verwendung mehrerer Bewegungsfunktionen, die eine Lauffunktion, eine Stoppfunktion und eine Lenk- bzw. Wendefunktion beinhalten, durch eine Bedienung unter Verwendung mehrerer Fahrfunktionen eines Fahrers zu bewegen, und das Fahrzeug (1) die Fahrzeugsteuerungs- bzw. -regelungsvorrichtung (100) nach einem der vorhergehenden Ansprüche umfasst.

6. Fahrassistenzverfahren zum Steuern bzw. Regeln eines Fahrzeugs (1) derart, dass sich das Fahrzeug (1) gemäß Verkehrsumgebung und Bewegungsumgebung um das Fahrzeug (1) herum bewegt, wobei das Fahrzeug (1) konfiguriert ist, sich unter Verwendung mehrerer Bewegungsfunktionen, die eine Lauffunktion, eine Stoppfunktion und eine Lenk- bzw. Wendefunktion beinhalten, durch eine Fahrzeugbedienung unter Verwendung mehrerer Fahrfunktionen eines Fahrers zu bewegen, und wobei die Verkehrsumgebung eine Position und/oder Geschwindigkeit eines Objekts um das Fahrzeug (1) herum beinhaltet und die Bewegungsumgebung physikalische Größen beinhaltet, die eine Fahrzeugdynamik beeinflussen, wobei das Verfahren umfasst:
Einstellen einer Fahrleistungsanforderung, die für das Bewegen des Fahrzeugs (1) in der Verkehrsumgebung und der Bewegungsumgebung angefordert wird;
Bestimmen, ob eine Fahrleistung jeder der mehreren Fahrfunktionen des Fahrers die Fahrleistungsanforderung erfüllt;
Identifizieren, von den mehreren Fahrfunktionen des Fahrers, die Fahrfunktion des Fahrers mit der Fahrleistung, welche die Fahrleistungsanforderung nicht erfüllt, als eine unzureichende Funktion, und
Ausführen, damit der Fahrer und das Fahrzeug (1) die Fahrleistungsanforderung aufbringen bzw. erfüllen, einer Fahrfunktionssubstitutionsverarbeitung, um das Fahrzeug (1) so zu steuern bzw. zu regeln, dass das Fahrzeug (1) die identifizierte unzureichende Funktion durchführt, und einer Fahrleistungsassistenzverarbeitung, um dem Fahrer Informationen bereitzustellen, um die Fahrleistung der identifizierten unzureichenden Funktion nahe an ein Niveau der Fahrleistungsanforderung zu bringen,
wobei
die mehreren Fahrfunktionen des Fahrers beinhalten: eine Wahrnehmungsfunktion, um zumindest die Verkehrsumgebung und die Bewegungsumgebung wahrzunehmen; eine Bestimmungsfunktion, um die in der Verkehrsumgebung und der Bewegungsumgebung durchzuführende Fahrzeugbedienung zu bestimmen; und eine Bedienfunktion, um die in der Verkehrsumgebung und der Bewegungsumgebung durchzuführende Bedienung des Fahrzeugs (1) durchzuführen, und
bei der Fahrleistungsbestimmungsverarbeitung bestimmt wird, ob die Fahrleistung von jeder der Wahrnehmungsfunktion, der Bestimmungsfunktion und der Bedienfunktion die Fahrleistungsanforderung erfüllt.

7. Verfahren nach Anspruch 6, wobei
die Fahrleistungsassistenzverarbeitung eine Verarbeitung ist, um den Fahrer über eine von dem Fahrer für die unzureichende Funktion durchzuführende Fahrzeugbedienung zu benachrichtigen.

8. Verfahren nach einem der Ansprüche 6 oder 7, wobei
bei der Fahrleistungsassistenzverarbeitung Informationen mit unterschiedlichem Inhalt gemäß jeder der mehreren Fahrfunktionen des Fahrers bereitgestellt werden.

9. Verfahren nach einem der Ansprüche 6 bis 8, wobei
die Fahrleistungsanforderung zumindest eines von einer Sollgeschwindigkeit, einer Sollbeschleunigung, einer Sollgiergeschwindigkeit und eines Sollmoments beinhaltet.

## Revendications

1. Appareil de commande de véhicule (100) configuré pour exécuter une commande d'assistance à la conduite pour un véhicule (1) de sorte que le véhicule (1) se déplace en fonction d'un environnement de circulation et d'un environnement de déplacement autour du véhicule (1), le véhicule (1) étant configuré pour se déplacer en utilisant une pluralité de fonctions de déplacement, lesquelles incluent une fonction de roulement, une fonction d'arrêt et une fonction de virage, par une opération de véhicule utilisant une pluralité de fonctions de conduite d'un conducteur, dans lequel l'environnement de circulation inclut une position et/ou une vitesse d'un objet autour du véhicule (1) et l'environnement de déplacement inclut des quantités physiques qui affectent la dynamique de véhicule, l'appareil de commande de véhicule (100) étant configuré pour exécuter :
un traitement de réglage de requête de performance humaine-machine pour régler une requête de performance de conduite qui est demandée pour que le véhicule (1) se déplace dans l'environnement de circulation et l'environnement de déplacement ;
un traitement de détermination de performance de conduite pour déterminer si une performance de conduite de chacune de la pluralité de fonctions de conduite du conducteur satisfait la requête de performance de conduite ; et
un traitement d'identification de fonction insuffisante pour identifier, parmi la pluralité de fonctions de conduite du conducteur, la fonction de conduite du conducteur avec la performance de conduite ne satisfaisant pas la requête de performance de conduite en tant que fonction insuffisante,
dans lequel
l'appareil de commande de véhicule (100) est configuré pour exécuter en outre :
un traitement de substitution de fonction de conduite pour commander le véhicule (1) de sorte que le véhicule (1) réalise la fonction insuffisante identifiée à la place ; et
un traitement d'assistance à la performance de conduite pour fournir au conducteur des informations de manière à amener la performance de conduite de la fonction insuffisante identifiée proche d'un niveau de la requête de performance de conduite,
l'appareil de commande de véhicule est configuré pour exécuter le traitement de substitution de fonction de conduite et le traitement d'assistance à la performance de conduite pour faire exercer au conducteur et au véhicule (1) la requête de performance de conduite,
la pluralité de fonctions de conduite du conducteur incluent : une fonction sensorielle pour au moins percevoir l'environnement de circulation et l'environnement de déplacement ; une fonction de détermination pour déterminer l'opération de véhicule devant être réalisée dans l'environnement de circulation et l'environnement de déplacement ; et une fonction d'opération pour réaliser l'opération de véhicule (1) devant être réalisée dans l'environnement de circulation et l'environnement de déplacement, et
dans le traitement de détermination de performance de conduite, il est déterminé si la performance de conduite de chacune de la fonction sensorielle, la fonction de détermination et la fonction d'opération satisfait la requête de performance de conduite.

2. Appareil de commande de véhicule (100) selon la revendication 1, dans lequel
le traitement d'assistance à la performance de conduite est un traitement pour notifier le conducteur d'une opération de véhicule devant être réalisée par le conducteur pour la fonction insuffisante.

3. Appareil de commande de véhicule (100) selon la revendication 1 ou 2, dans lequel
dans le traitement d'assistance à la performance de conduite, des informations avec un contenu différent sont fournies en fonction de chacune de la pluralité de fonctions de conduite du conducteur.

4. Appareil de commande de véhicule (100) selon l'une quelconque des revendications précédentes, dans lequel
la requête de performance de conduite inclut au moins un élément parmi une vitesse cible, une accélération cible, une vitesse de lacet cible et un moment cible.

5. Véhicule (1) comprenant l'appareil de commande de véhicule (100) selon l'une quelconque des revendications précédentes, dans lequel le véhicule (1) est configuré pour se déplacer en utilisant une pluralité de fonctions de déplacement, lesquelles incluent une fonction de roulement, une fonction d'arrêt et une fonction de virage, par une opération utilisant une pluralité de fonctions de conduite d'un conducteur, et le véhicule (1) comprenant l'appareil de commande de véhicule (100) selon l'une quelconque des revendications précédentes.

6. Procédé d'assistance à la conduite de commande d'un véhicule (1) de sorte que le véhicule (1) se déplace en fonction d'un environnement de circulation et d'un environnement de déplacement autour du véhicule (1), dans lequel le véhicule (1) est configuré pour se déplacer en utilisant une pluralité de fonctions de déplacement, lesquelles incluent une fonction de roulement, une fonction d'arrêt et une fonction de virage, par une opération de véhicule utilisant une pluralité de fonctions de conduite d'un conducteur, et dans lequel l'environnement de circulation inclut une position et/ou une vitesse d'un objet autour du véhicule (1) et l'environnement de déplacement inclut des quantités physiques qui affectent la dynamique de véhicule, le procédé comprenant :
régler une requête de performance de conduite qui est demandée pour que le véhicule (1) se déplace dans l'environnement de circulation et l'environnement de déplacement ;
déterminer si une performance de conduite de chacune de la pluralité de fonctions de conduite du conducteur satisfait la requête de performance de conduite ;
identifier, parmi la pluralité de fonctions de conduite du conducteur, la fonction de conduite du conducteur avec la performance de conduite ne satisfaisant pas la requête de performance de conduite en tant que fonction insuffisante ; et
exécuter, pour faire exercer au conducteur et au véhicule (1) la requête de performance de conduite, un traitement de substitution de fonction de conduite pour commander le véhicule (1) de sorte que le véhicule (1) réalise la fonction insuffisante identifiée, et un traitement d'assistance à la performance de conduite pour fournir au conducteur des informations de manière à amener la performance de conduite de la fonction insuffisante identifiée proche d'un niveau de la requête de performance de conduite,
dans lequel
la pluralité de fonctions de conduite du conducteur incluent : une fonction sensorielle pour au moins percevoir l'environnement de circulation et l'environnement de déplacement ; une fonction de détermination pour déterminer l'opération de véhicule devant être réalisée dans l'environnement de circulation et l'environnement de déplacement ; et une fonction d'opération pour réaliser l'opération de véhicule (1) devant être réalisée dans l'environnement de circulation et l'environnement de déplacement, et
dans le traitement de détermination de performance de conduite, il est déterminé si la performance de conduite de chacune de la fonction sensorielle, la fonction de détermination et la fonction d'opération satisfait la requête de performance de conduite.

7. Procédé selon la revendication 6, dans lequel
le traitement d'assistance à la performance de conduite est un traitement pour notifier le conducteur d'une opération de véhicule devant être réalisée par le conducteur pour la fonction insuffisante.

8. Procédé selon l'une quelconque des revendications 6 ou 7, dans lequel
dans le traitement d'assistance à la performance de conduite, des informations avec un contenu différent sont fournies en fonction de chacune de la pluralité de fonctions de conduite du conducteur.

9. Procédé selon l'une quelconque des revendications 6 à 8, dans lequel
la requête de performance de conduite inclut au moins un élément parmi une vitesse cible, une accélération cible, une vitesse de lacet cible et un moment cible.
